Europäisches Patentamt

European Patent Office

Office européen des brevets

(19)

(11) Veröffentlichungsnummer: **0 190 559**
**B1**

(12) **EUROPÄISCHE PATENTSCHRIFT**

(45) Veröffentlichungstag der Patentschrift: **20.06.90**

(21) Anmeldenummer: **86100199.8**

(22) Anmeldetag: **09.01.86**

(51) Int. Cl.$^5$: **C 09 D 5/02,** C 09 D 7/14,
C 08 J 3/02

(54) Verfahren zum Herstellen von wässrigen Lacken.

(30) Priorität: **02.02.85 DE 3503527**

(43) Veröffentlichungstag der Anmeldung:
**13.08.86 Patentblatt 86/33**

(45) Bekanntmachung des Hinweises auf die
Patenterteilung:
**20.06.90 Patentblatt 90/25**

(84) Benannte Vertragsstaaten:
**AT BE CH FR GB IT LI NL SE**

(56) Entgegenhaltungen:
**EP-A-0 061 726**

(73) Patentinhaber: **BASF Lacke + Farben
Aktiengesellschaft
Max-Winkelmann-Strasse 80
D-4400 Münster (DE)**

(72) Erfinder: **Schwarz, Günther, Dr.
Zum Hiltruper See 25
D-4400 Münster (DE)**

**Beschreibung**

Die Erfindung bezieht sich auf ein Verfahren zum Herstellen von wäßrigen Lacken unter Einrühren einer heißen, wäßrigen Wachsemulsion.

Es ist in der Lackindustrie üblich, Lacken, insbesondere auch wäßrigen Lacken, Lackhilfsmittel zur Beeinflussung bestimmter Lackeigenschaften, wie z.B. Benetzung, Verlauf, Haftung, Härtung und Vernetzung, zuzugeben. Die flüssigen hydrophoben Lackhilfsmittel können beispielsweise Duftstoffe, Farbstoffe, Benetzungsmittel, Entschäumer, Katalysatoren, Initiatoren, Vernetzer und Stoffe mit Trennwirkung, wie z.B. paraffine oder Silikonöle, sein.

Aus der DE—OS 31 12 659 ist ein Verfahren zum Herstellen von wäßrigen Lacken mit einem Gehalt an mineralischen Füllstoffen und/oder Pigmenten bekannt, bei dem man eine zwischen 80°C und 100°C heiße Wachsemulsion in Wasser unter starkem Rühren in den wäßrigen Lack, der die mineralischen Füllstoffe und/oder Pigmente enthält, einfließen läßt. Hierbei werden auf 0,1 bis 15 Gewichtsteile mineralische Füllstoffe und/oder Pigmente 0,5 bis 5 Gewichtsteile Wachs eingesetzt. Die einzelnen Partikel werden von einem voluminösen Wachsmantel umhüllt und dadurch im spezifischen Gewicht dem Gesamtsystem angepaßt. Dadurch bleiben die umhüllten Teilchen in der Schwebe, womit die Sedimentation unterbunden wird.

In den Beispielen der DE—OS 31 12 659 werden Weichmacher enthaltende, wäßrige Lacke auf Basis von veretherten Melamin-Formaldehyd-Harzen beschrieben. Es handelt sich dabei mit großer Wahrscheinlichkeit um wasserlösliche, hydrophile Weichmacher, da normalerweise in wäßrigen bzw. wasserverdünnbaren Lacken wasserlösliche bzw. hydrophile Weichmacher eingesetzt werden (siehe z.B. H. Kittel, Lehrbuch der Lacke und Beschichtungen, Band III, Verlag W.A. Colomb in der H. Heenemann GmbH, Berlin-Oberschwandorf, 1976, S. 222 ff.).

Bei Einsatz flüssiger hydrophober Hilfsmittel in wäßrigen Lacken tritt die Schwierigkeit auf, eine homogene Verteilung der Lackhilfsmittel als Voraussetzung für eine über den Bindemittelfilm völlig einheitliche Wirkung zu erreichen. Eine Entmischung führt schon nach kurzer Lagerzeit zur Unbrauchbarkeit des Materials.

Hydrophobe flüssige Hilfsmittel agglomerieren an der Oberfläche der wäßrigen Lösung, bilden an der Gefäßwandung Ablagerungen, oder es entsteht in Abhängigkeit vom spezifischen Gewicht ein Bodensatz.

Der Erfindung liegt die Aufgabe zugrunde, eine Methode zur Einarbeitung hydrophober Lackhilfsmittel inwäßrige Bindemittelsysteme zu erarbeiten, wobei die Lackhilfsmittel homogen verteilt und somit stabilisiert werden sollen.

Die Aufgabe wird durch ein Verfahren zum Herstellen von wäßrigen Lacken gelöst, bei dem man eine 80°C bis 100°C heiße, wäßrige Wachsemulsion unter starkem Rühren entweder in einen wäßrigen, hydrophobe Lackhilfsmittel enthaltenden Lack, der eine Temperatur im Bereich von 10° bis 40°C hat, einfließen läßt oder zunächst die heiße wäßrige Wachsemulsion unter starkem Rühren in eine wäßrige Emulsion des hydrophoben Lackhilfsmittels, die eine Temperatur im Bereich von 10°C bis 40°C hat, einfließen läßt und diese Mischung dem wäßrigen Lack zusetzt, wobei auf 0,1 bis 15 Gewichtsteile flüssiges hydrophobes Lackhilfsmittel 0,5 bis 5 Gewichtsteile Wachs kommen und das Wachs mit einem Emulgator gekoppelt ist. Die flüssigen hydrophoben Stoffe werden in den wäßrigen Lösungen durch starkes Rühren in kleine Tröpfchen fein verteilt. Noch während des Rührvorganges wird eine 80°C bis 100°C heiße wäßrige Lösung eines Wachses in dünnem Strahl in den Kegel, der sich am Rührstab von unten nach oben verbreiternd bildet, eingetragen. Beim Abkühlen fällt das Wachs aus und umhüllt hierbei die im Wasser fein verteilten Tröpfchen der hydrophoben Flüssigkeit. Das Mengenverhältnis des flüssigen hydrophoben Lackhilfsmittels zu Wachs von 0,1 bis 15 zu 0,5 bis 5 Gewichtsteilen wird so gewählt, daß die Gesamtoberfläche der zu umhüllenden Flüssigkeitströpfchen abgedeckt werden kann. Auf diese Weise wird die ursprünglich hydrophobe Oberfläche der Flüssigkeitströpfchen durch die Wachshülle mit hydrophilen Eigenschaften ausgestattet. Das durch dieses Verfahren in Wasser bzw. in einer wäßrigen Lösung eingearbeitete, flüssige Lackhilfsmittel wird gleichmäßig verteilt, die Lösung ist stabil und lagerfähig. Es war überraschend und nicht vorhersehbar, daß eine spezielle Arbeitsweise der Wachseinfällung zu einer Umhüllung von hydrophoben Flüssigkeiten führt. Es hat sich herausgestellt, daß das beste Ergebnis erzielt wird, wenn die Temperatur der wäßrigen Vorlage, in die die heiße Wachslösung eingefällt wird, im Bereich von 15°C bis 20°C liegt.

Wachse sind als Lackadditive gebräuchlich, und zwar vorwiegend zur Mattierung des Lackfilms. Hierfür kommen vor allem Wachse mit höherem Schmelzbereich in Betracht. Die Einarbeitung in die wäßrigen Lacke erfolgt durch Einrühren von gepulvertem Hartwachs oder aus einer Wachslösung oder Wachspaste. Die Herstellung der Wachsemulsionen erfolgt am einfachsten nach dem Wachs- zu -Wasser-Verfahren. Dabei werden Wachsschuppen oder Wachspulver in das vorgelegte heiße Wasser eingerührt. Daran schließt sich ein kurzes Aufkochen auf 100°C an, bis eine gleichmäßige Emulsion vorliegt. Es ist aber auch möglich, das Wachs erst zu schmelzen und danach in die Wachsschmelze heißes Wasser einzurühren. Im allgemeinen wird eine 10 bis 20Gew.-%ige Emulsion hergestellt, die mit heißem Wasser verdünnt werden kann. Geeignet sind Wachse, deren Schmelzpunkt über 60°C und deren Trübungspunkt in Toluol zwischen 35°C und 45°C liegt.

Bevorzugte Wachse sind Esterwachse auf Basis eines gebleichten und modifizierten Montanwachses. Vorteilhafterweise ist das Wachs mit einem nichtionogenen Emulgator gekoppelt.

Wirkungslos in bezug auf Homogenität und Stabilisierung bleibt die Einarbeitung von wachs, wenn man die heiße Wachsemulsion in Wasser auf eine Temperatur von unter 80°C abkühlen läßt. Das emulgierte bzw. gelöste Wachs fällt beim Trübungspunkt wieder aus. Wird eine derart abgekühlte Wachsmischung, die in vielen Fällen als Gel vorliegt, in den wäßrigen Lack eingearbeitet, kann eine Entmischung nicht verhindert werden.

Die geeigneten wäßrigen Lacke enthalten in der Regel keine organischen Lösungsmittel und sind mit Wasser misch- und verdünnbar. Die Bindemittel sind in den wäßrigen Lacken entweder gelöst oder liegen in Form einer Dispersion vor. Bei dem erfindungsgemäßen Verfahren müssen die Bindemittel und Lacke mit Wasser mischbar sein. So eignen sich beispielsweise Melamin-Formaldehyd-Harze, die mit Alkoholen verethert werden.

Die gewünschte Wirkung der Hilfsstoffe wird beim Auftragen des Naßfilms bzw. bei der darauffolgenden Trocknung bzw. Härtung durch Temperatureinwirkung, aber auch beim Kalander-Verfahren durch die hierbei übliche zusätzliche Ausübung eines linearen oder flächigen Drucks erreicht. Bei der Härtung der Bindemittelfilme werden die umhüllten flüssigen Lackhilfsmittel wieder freigesetzt und können somit ihre Wirkung entfalten.

Das Verfahren kann zur Herstellung sowohl von Fertigals auch von Halbfabrikaten dienen. Eine Emulsion von Silikonöl in Wasser kann gemäß dem erfindungsgemäßen Verfahren mit einer heißen Wachsemulsion behandelt werden, wobei eine Verkapselung der Silikontröpfchen durch das ausfallende Wachs eintritt. Die auf diese Weise hergestellte Mischung ist homogen und lagerstabil und kann bei Bedarf wäßrigen Lacken zwecks Verbesserung der Lackeigenschaften zugemischt werden. Derartige Lacke eignen sich zur Herstellung von Trennpapieren, da das Silikonöl Antihafteigenschaften besitzt.

Mit der Methode der Wachseinarbeitung ist verbunden, daß die resultierende Oberfläche des Bindemittelfilmes kratzfester und polierunempfindlicher wird. Weiterhin werden die rheologischen Eigenschaften des flüssigen Materials günstig beeinflußt, da von der Feinstverteilung des Wachses eine thixotropierende Wirkung ausgeht. Ausserdem wird die Gefahr der Blasenbildung dadurch reduziert, daß das fein verteilte Wachs als Entlüftungsmittel dient.

Im folgenden wird die Erfindung an Hand von Beispielen näher erläutert.

Beispiel 1: Herstellung einer Wachsemulsion Zur Herstellung einer Wachsemulsion wird ein Esterwachs auf Basis eines gebleichten und modifizierten Montanwachses, welches mit einem nichtionogenen Emulgatorsystem gekoppelt ist, verwendet. Das Wachs hat einen Schmelzpunkt von 78 bis 80°C, einen Kegelfließpunkt bei 25°C nach Höppler von ca. 100 kg/cm², eine Penetrometerzahl bei 25°C/100 g/5 Sekunden von 3,5, eine Dichte bei 20°C von 1,01 bis 1,02, eine Schmelzviskosität nach Ubbelohde bei 100°C von ca. 27mm²/s und einen Trübungspunkt in Toluol von ca. 39°C. Zur Herstellung der Wachsemulsion wird heißes Wasser vorgelegt, in das die Wachsschuppen eingerührt werden. Anschließend wird die Mischung kurz aufgekocht und auf 20 Gewichts-Prozent Wachs eingestellt. Bis zur Verarbeitung wird die Temperatur auf 95°C aufrechterhalten.

Beispiel 2:

400 g eines handelsüblichen, wäßrigen Lacks auf der Basis eines mit Methanol veretherten Melamin-Formaldehyd-Harzes mit einem Bindemittelfestkörper von ca. 60% wird mit einem Rührer, dessen Durchmesser 5cm beträgt, mit 2000 U/min gerührt. Während des Rührens werden 4 g eines handelsüblichen Silikonöls unter Verwendung von 1 g eines handelsüblichen Emulgators in der wäßrigen Lösung fein verteilt. Das Zweiphasengemisch hat eine Temperatur von 18-20°C. Unter Fortsetzung des Rührens werden 10 g der im Beispiel 1 hergestellten, 95°C heißen Wachslösung in das wäßrige Zweiphasengemisch eingetragen. Nach ca. 10-15 Minuten Rührzeit ist der Umhüllungs- bzw. Verkapselungsvorgang beendet. Das Silikonöl ist gleichmäßig verteilt. Eine Entmischung tritt selbst nach monatelanger Lagerung nicht auf. Aufgrund des eingearbeiteten Silikonöls handelt es sich um ein Überzugsmittel mit guter Trennwirkung.

Beispiel 3:

4 g einer Mischung handelsüblicher Silikonöle werden in 85 ml Wasser unter Verwendung von 1 g eines handelsüblichen Emulgators unter starkem Rühren einemulgiert. Unter Fortsetzung des Rührens mit 2000 U/min mit einem Rührer, der einen Durchmesser von 5cm hat, werden 10 g der im Beispiel 1 hergestellten, 95°C heißen Wachsemulsion in die Silikon-Wasser-Emulsion, die eine Temperatur von 20°C hat, eingetragen. Das starke Rühren wird bis zum Abkühlen auf Raumtemperatur fortgesetzt. Das Silikonöl ist gleichmäßig verteilt, es tritt nach monatelanger Lagerung keine Entmischung auf. Dieses Halbfabrikat kann nun beispielsweise 400 g eines handelsüblichen, wäßrigen Lacks auf der Basis eines Harnstoff-Formaldehyd-Harzes, welches mit Methanol verethert ist, zugemischt werden. Der wäßrige Lack hat gute Trenneigenschaften, eine Entmischung tritt selbst nach langer Lagerung nicht auf.

Vergleichsbeispiel

Das Beispiel 2 wird wiederholt, nur mit dem Unterschied, daß die heiße Wachsemulsion vor dem Einbringen in den wäßrigen Lack auf Raumtemperatur abgekühlt wird. Die entstandene paste wird dann unter Rühren in den wäßrigen Lack eingetragen. Der Lack zeigt bereits nach 14 Tagen deutliche Absetzerscheinungen.

**Patentansprüche**

1. Verfahren zum Herstellen von wäßrigen Lacken unter Einrühren einer heißen, wäßrigen Wachsemulsion mit der Maßgabe, daß das Wachs mit einem Emulgator gekoppelt ist und man die 80°C bis 100°C heiße wäßrige Wachsemulsion unter starkem Rühren entweder in einen wäßrigen, hydrophobe Lackhilfsmittel enthaltenden Lack, der eine Temperatur im Bereich von 10°C—40°C hat, einfließen läßt oder zunächst die heiße wäßrige Wachsemulsion unter starkem Rühren in eine wäßrige Emulsion des hydrophoben Lackhilfsmittels, die eine Temperatur im Bereich von 10°—40°C hat, einfließen läßt und diese Mischung dem wäßrigen Lack zusetzt, wobei auf 0,1 bis 15 Gewichtsteile flüssiges hydrophobes Lackhilfsmittel 0,5 bis 5 Gewichtsteile Wachs kommen.

2. Verfahren nach Anspruch 1, dadurch gekennzeichnet, daß der die flüssigen hydrophoben Lackhilfsmittel enthaltende Lack oder die wäßrige Emulsion des Lackhilfsmittels eine Temperatur im Bereich von 15°C—20°C hat.

3. Verfahren nach den Ansprüchen 1 bis 2, dadurch gekennzeichnet, daß man für die Wachsemulsion Wachse mit einem Schmelzpunkt über 60°C und einem Trübungspunkt in Toluol zwischen 35°C und 45°C verwendet.

4. Verfahren nach einem der Ansprüche 1 bis 3, dadurch gekennzeichnet, daß das Wachs mit einem nichtionogenen Emulgator gekoppelt ist.

**Revendications**

1. Procédé de fabrication de laques aqueuses avec délayage d'une émulsion aqueuse, chaude, de cire, suivant lequel la cire est couplée avec un émulsifiant, et ou bien on fait s'écouler l'émulsion aqueuse de cire portée à une température de 80°C à 100°C, sous forte agitation, dans une laque aqueuse qui renferme un adjuvant hydrophobe pour laque et qui a une température se situant dans la plage de 10°C—40°C, ou bien on fait tout d'abord s'écouler l'émulsion aqueuse, chaude, de cire, sous forte agitation, dans une émulsion aqueuse de l'adjuvant hydrophobe pour laque, qui a une température se situant dans la plage de 10°—40°C, et on ajoute ce mélange à la laque aqueuse, où, à 0,1 à 15 parties en poids d'adjuvant hydrophobe liquide pour laque, il revient 0,5 à 5 parties en poids de cire.

2. Procédé selon la revendication 1, caractérisé par le fait que la laque renfermant l'adjuvant hydrophe liquide pour laque ou l'émulsion aqueuse de l'adjuvant pour laque a une température se situant dans la plage de 15°C—20°C.

3. Procédé selon l'une des revendications 1 et 2, caractérisé par le fait que l'on utilise, pour l'émulsion de cire, des cires présentant un point de fusion dépassant 60°C et un point de trouble dans le toluène compris entre 35°C et 45°C.

4. Procédé selon l'une des revendications 1 à 3, caractérisé par le fait que la cire est couplée avec un émulsifiant non-ionogène.

**Claims**

1. Method of making aqueous paints by stirring in a hot, aqueous wax emulsion, with the proviso that the wax is coupled with an emulsifier and the hot aqueous wax emulsion at 80°C to 100°C is, with vigorous stirring, either allowed to run into an aqueous paint which contains hydrophobic paint auxiliaries and is at 10°C—40°C, or the hot aqueous wax emulsion is first allowed to run, with vigorous stirring, into an aqueous emulsion of the hydrophobic paint auxiliary, which is at 10°C—40°C, and this mixture is added to the aqueous paint, 0.5 to 5 parts by weight of wax being used per 0.1 to 15 parts by weight of liquid hydrophobic paint auxiliary.

2. Method according to claim 1, characterized in that the paint containing the liquid hydrophobic paint auxiliaries, or the aqueous emulsion of the paint auxiliary, is at 15°C—20°C.

3. Method according to claims 1 to 2, characterized in that waxes having a melting point above 60°C and a turbidity point in toluene of between 35°C and 45°C are used for the wax emulsion.

4. Method according to one of claims 1 to 3, characterized in that the wax is coupled with a nonionic emulsifier.